## Europäisches Patentamt

## European Patent Office

## Office européen des brevets

(19)

(11) Veröffentlichungsnummer: **0 168 665**
**B1**

(12) # EUROPÄISCHE PATENTSCHRIFT

(45) Veröffentlichungstag der Patentschrift:
**23.11.88**

(21) Anmeldenummer: **85107593.7**

(22) Anmeldetag: **19.06.85**

(51) Int. Cl.⁴: **A 01 D 57/24,** A 01 D 57/00, A 01 D 57/28, A 01 D 57/30

(54) **Rückwärtig an eine Erntemaschine angebaute Schwadablegeeinrichtung.**

(30) Priorität: **20.06.84 US 622364**

(43) Veröffentlichungstag der Anmeldung:
**22.01.86 Patentblatt 86/4**

(45) Bekanntmachung des Hinweises auf die Patenterteilung:
**23.11.88 Patentblatt 88/47**

(84) Benannte Vertragsstaaten:
**BE DE FR GB IT LU NL SE**

(56) Entgegenhaltungen:
**DD-A-136 917**
**DE-A-3 329 276**
**GB-A-1 020 400**
**GB-A-2 077 562**
**US-A-3 343 347**

(73) Patentinhaber: **DEERE & COMPANY, 1 John Deere Road, Moline Illinois 61265 (US)**

(72) Erfinder: **Stephenson, Roger Dale, RR 3, Bloomfield Iowa 52537 (US)**

(74) Vertreter: **Feldmann, Bernhard, DEERE & COMPANY European Office, Patent Department Steubenstrasse 36- 42 Postfach 503, D-6800 Mannheim 1 (DE)**

LIBER, STOCKHOLM 1988

**Beschreibung**

Die Erfindung bezieht sich auf eine rückwärtig an eine sich auf Rädern abstützende Erntemaschine angebaute Schwadablegeeinrichtung mit einem Rahmen und einem in seiner Förderrichtung umkehrbaren Querförderer, der am Rahmen zwischen zwei Endstellungen derart verschiebbar angeordnet ist, daß entweder in der ersten Endstellung ein erster Schwad vorzugsweise zwischen den Rädern oder in der zweiten Endstellung ein zu dem ersten Schwad seitlich versetzter Schwad durch Umkehrung der Förderrichtung abgelegt werden kann, wobei zum Verschieben von einer Endstellung in die andere ein Arm einenends am Rahmen angelenkt ist.

Die Kapazität von Feldhäckslern oder Ballenpressen ist in der letzten Zeit derart angewachsen, daß ein einzelner Schwad die Kapazität nicht voll ausnutzen würde. In der Vergangenheit war es daher gebräuchlich, zwei Schwaden zusammenzurechen, nachdem sie relativ trocken waren. Dies ergab zwar den für die Kapazität des Feldhäckslers oder der Ballenpressen erforderlichen großen Schwad, führte aber auch dazu, daß Steine oder andere Fremdobjekte sich in dem Schwad befanden, außerdem traten durch das Zusammenrechen Blattverluste auf.

Bei der Schwadablegeeinrichtung, von der die Erfindung ausgeht (GB-A-1 020 400), ist ihr Querförderer an beiden Seitenkanten auf einem Rahmen geführt, wobei der am Rahmen angelenkte, hydraulisch verschwenkbare Arm anderenends über ein weiteres Gelenk an einem Stellarm angreift, der seinerseits mit dem Querförderer schwenkbar verbunden ist. Hierdurch ist der Schiebemechanismus in seinem Aufbau aufwendig, benötigt viel Raum, vergrößert das Gewicht der Schwadablegeeinrichtung und weist im Ganzen drei und unter Hinzurechnung des Hydraulikzylinders fünf Schwenkstellen auf.

Die mit der Erfindung zu lösende Aufgabe wird darin gesehen, die Schiebebewegung in einfacher Weise ausführen zu können. Diese Aufgabe ist nach der Erfindung dadurch gelöst, daß der Querförderer mit einer quer zu seiner Förderrichtung ausgerichteten Schiene versehen ist und daß das andere Ende des Arms in der Schiene längs zu dieser verschiebbar gelagert ist. Auf diese Weise kann durch bloßes Verschwenken des Armes um seine Anlenkstelle an den Rahmen der Querförderer seitlich verstellt werden, wobei dann der Arm in der Schiene selbst sich verschiebt. Hierdurch ist eine relativ kleine, wenig Raum in Anspruch nehmende Schiebeeinrichtung geschaffen, die leicht an derartigen Schwadablegeeinrichtungen, die an Erntemaschinen angebaut sind, vorgesehen werden kann.

In zweckmäßiger Weise ist nach der Erfindung der Rahmen an der der Erntemaschine zugelegenen Seite der Schwadablegeeinrichtung als Querbalken ausgebildet und nimmt eine Führung auf, auf der die Schwadablegeeinrichtung quer zur Fahrtrichtung verschiebbar ist. Auf diese Weise ist für den Querförderer zunächst eine Abstützung durch den Querbalken an einer Seitenkante erfolgt, während die andere Seitenkante durch den Arm abgestützt wird, der damit neben der Verschiebefunktion noch eine Abstützaufgabe wahrnimmt.

Um die Verschiebebewegung zu erleichtern, wird nach der Erfindung ferner vorgeschlagen, daß der Querförderer mit zwei zueinander Abstand aufweisenden Rollen versehen ist, die auf der Führung laufen und Flanschscheiben aufweisen, die die Rollen auf der Führung halten.

Damit kein Gut zwischen die Rollen und die Führung gelangen kann, sind die Rollen erfindungsgemäß abdeckbar ausgebildet. Nach einem weiteren erfindungsgemäßen Merkmal kann der Arm unterhalb des Querförderers mit sich zu seinem in der Schiene angeordneten Ende verjüngenden Seitenwänden vorgesehen sein, wodurch sich eine relativ leichte Konstruktion ergibt. Ferner ist es nach der Erfindung zweckmäßig, daß der Arm beim Verschieben des Querförderers verwindbar ist. Auf diese Weise kann sein in der Schiene verschiebbar angeordnetes Ende sich leicht verkanten und sich so den verschiedenen Stellungen der Schiene leicht anpassen.

Damit das Verschieben des in der Schiene angeordneten Endes des Armes in einfacher Weise erfolgen kann, ist nach der Erfindung ferner vorgesehen, daß das in der Schiene verschiebbar angeordnete Ende des Arms ein zylindrisches Lager aufweist, das in der Schiene verschiebbar ist und um eine Achse umläuft, die normalerweise senkrecht zu der Achse des Arms verläuft.

Vorteilhaft können die Rollen über Niederhalter auf der Führung gehalten werden.

Damit der Querförderer bei Erreichen seiner Endstellungen in einfacher Weise abgestellt werden kann, ist nach der Erfindung den beiden Endstellungen des Querförderers je ein Schalter zum Abschalten der Schiebebewegung des Querförderers zugeordnet. Hierzu können den beiden Schaltern je ein Betätiger zugeordnet sein, die je einen in Abhängigkeit von der Bewegung des Arms verstellbaren Träger mit einem in diesen einstellbaren Knopf aufweisen, wobei die Knöpfe die Schalter betätigen. Hierdurch ist gewährleistet, daß die einzelnen Endstellungen frei wählbar sind, und zwar in Abhängigkeit von dem in den Träger einstellbaren Knopf, da durch seine Verstellung der Zeitpunkt der Schalterbetätigung gewählt werden kann. Die Schalter sind zweckmäßig als elektrische Schalter ausgebildet, so daß die Schiebebewegung elektrohydraulisch erfolgt. Damit die Träger der Bewegung des Arms folgen können bzw. der des Querförderers, sind die Träger über Kabel mit dem zwischen den Trägern am Rahmen angelegten Arm verbunden und gegen die Wirkung je einer Feder über den Arm verstellbar, so daß sie leicht in ihre Ausgangsposition zurückkehren können.

Zur Vorwahl der jeweiligen Endstellungen ist es nach der Erfindung zweckmäßig, wenn jeder Träger ein Langloch aufweist, in dem der zugehörige Knopf einstellbar ist.

Bei rückwärtig an Erntemaschinen angebauten Schwadablegeeinrichtungen, die zur unterschiedlichen Schwadablage quer verschiebbar sind und dazu ihre Förderrichtung umkehren, ist es nach der Erfindung zweckmäßig, daß die Drehrichtung des Querförderers in Abhängigkeit von der Stellung des Arms umkehrbar ist, wobei hierzu weiter vorgeschlagen wird, daß bei der Verschiebung des Querförders aus einer Endstellung die Drehrichtung des Querförderers sofort und bei der Verschiebung des Querförderers aus der anderen Endstellung die Drehrichtung des Querförderers zeitlich verzögert umkehrbar ist, wodurch erreicht wird, daß, wenn ein neuer Schwad gelegt wird, kein Gut in noch nicht gemähtes Erntegut abgelegt wird.

Die Zeitverzögerung kann dadurch erreicht werden, daß einem Betätiger ein zweiter Schalter zugeordnet ist, der zu dem anderen Schalter entsprechenden Abstand aufweisen soll und damit über den Knopf zeitlich verzögert betätigt wird.

Was den elektrohydraulischen Steuerkreis anbelangt, so kann nach der Erfindung jeder Schalter mit einem magnetgesteuerten Ventil in Verbindung stehen, die bei geschlossenen zugehörigen Schaltern einen Flüssigkeitsfluß durch je eine von einer Kraftquelle gespeiste Pilotleitung gestatten.

Wenn nach der Erfindung zur Umkehrung der Förderrichtung des Querförderers ein hydraulisch beaufschlagbarer Motor vorgesehen wird, kann ein magnetgesteuertes Ventil mit seiner Pilotleitung an eine Seite eines gegen die Wirkung einer Feder verstellbaren Pilotventils angeschlossen sein, das je nach seiner Stellung eine der beiden Seiten des Motors mit der Kraftquelle und die andere Seite mit einem Sammelbehälter verbindet. Damit ist es lediglich erforderlich, für den Motor ein magnetgesteuertes Ventil und damit auch nur einen Schalter vorzusehen, der bei Stromführung das Ventil derart verschiebt, daß die Pilotleitung mit der Kraftquelle verbunden wird und damit auch an dem Pilotventil einen Druck aufbaut, in der dieses in eine Stellung verschoben wird, in der der Motor in einer Drehrichtung angetrieben wird. In dem Augenblick, in dem der Stromkreis zu dem magnetgesteuerten Ventil unterbrochen ist, kommt die Feder zur Wirkung und schiebt das Pilotventil in eine zweite Stellung, in der dann der Motor in einer umgekehrten Drehrichtung antreibbar ist.

Für den elektrohydraulischen Steuerkreis wird ferner vorgeschlagen, daß die beiden anderen magnetgesteuerten Ventile mit ihren Pilotleitungen an die sich gegenüberliegenden Seiten eines weiteren Pilotventils angeschlossen Sind, das über Federn in seiner Neutralstellung gehalten ist und bei einer druckbeaufschlagten Seite eine Verbindung der Kraftquelle mit einer Seite des hydraulischen Zylinders bzw. des Sammelbehälters mit der anderen Seite des hydraulischen Zylinders herstellt. Auf diese Weise kann das Pilot-Ventil drei verschiedene Stellungen aufweisen, und zwar einmal eine Neutralstellung, in der es über die beiden Federn gehalten wird und in der keines der beiden magnetgesteuerten Ventile über den zugehörigen Schalter in eine Stellung verschoben wurde, in der sie Druckflüssigkeit zu einer Seite des Pilotventils führen können. In der Neutralstellung des Pilotventils wird auch dem hydraulischen Zylinder keine Druckflüssigkeit zugeführt, so daß dann auch keine Schiebebewegung der Schwadablegeeinrichtung bzw. des Querförderers erfolgen kann. Sobald einer der Schalter stromführend ist, wird das zugehörige magnetgesteuerte Ventil in eine Stellung verschoben, in der eine Seite des Pilotventils druckbeaufschlagt wird, das sich dadurch so verstellen kann, daß eine Seite des hydraulischen Zylinders mit der Kraftquelle und die andere Seite mit dem Sammelbehälter in Verbindung kommt. Bei Verstellung des anderen magnetgesteuerten Ventils wird die andere Seite des Pilot-Ventils druckbeaufschlagt und dieses dadurch in seine entgegengesetzte Stellung verschoben, in der wiederum Druckflüssigkeit zu der anderen Seite des hydraulischen Zylinders gelangen kann, wobei dann von der gegenüberliegenden Seite die Flüssigkeit in den Sammelbehälter zurückfließen kann. Der elektrohydraulische Steuerkreis kann in einfacher Weise über einen einzigen Schalter betätigt werden, da die Druckmittelzufuhr zu dem hydraulischen Zylinder automatisch abgestellt wird. Nur der die Förderrichtung umkehrende hydraulische Motor wird ständig angetrieben. Will man diesen abstellen, so ist es lediglich erforderlich, die Druckmittelzufuhr von einer Kraftquelle zu dem Motor durch ein separates Ventil zu unterbrechen, das aber während des Einsatzes nicht mehr betätigt werden muß. Im einzelnen können hierzu die magnetgesteuerten Ventile über Leitungen mit den zugehörigen Schaltern verbunden sein, wobei das dem Motor zugeordnete magnetgesteuerte Ventil und das eine der dem hydraulischen Zylinder zugeordneten Ventile dem Betätiger mit den beiden Schaltern zugeordnet sind und das andere der dem hydraulischen Zylinder zugeordneten magnetgesteuerten Ventile dem Betätiger mit dem einen Schalter zugeordnet sind und wobei beide Betätiger mit ihren Schaltern über je eine Leitung über einen Schalter wechselseitig mit einer Stromquelle verbindbar sind.

In der Zeichnung ist ein nachfolgend näher erläutertes Ausführungsbeispiel der Erfindung dargestellt. Es zeigt:

Fig. 1 eine an eine gezogene Erntemaschine angeschlossene Schwadablegeeinrichtung in zwei Stellungen, in der einmal ein einzelner Schwad und zum anderen ein Doppelschwad abgelegt werden kann;

Fig. 2a die hinter der Erntemaschine auf den Boden abgestellte Schwadablegeeinrichtung mit sich in Arbeitsstellung befindlicher Erntemaschine;

Fig. 2b die an die Erntemaschine angeschlossene Schwadablegeeinrichtung mit sich in Transportstellung befindlicher Erntemaschine;

Fig. 3 Erntemaschine mit auf dem Boden abgestellter Schwadablegeeinrichtung in perspektivischer Darstellung;

Fig. 4 die an die Erntemaschine angebaute Schwadablegeeinrichtung in Arbeitsstellung;

Fig. 5 die Schwadablegeeinrichtung in Blickrichtung der Schnittlinie 5 - 5 in Fig. 4;

Fig. 6 ein Schnitt nach der Linie 6 - 6 in Fig. 5;

Fig. 7 ein Schnitt nach der Linie 7 - 7 in Fig. 5;

Fig. 8 ein Schnitt nach der Linie 8 - 8 in Fig. 7;

Fig. 9 den elektrohydraulischen Steuerkreis für die Betätigung der Schwadablegeeinrichtung;

Fig. 10 einen Schnitt nach der Linie 10 - 10 in Fig. 4

und die Fig. 11 und 12 ein weiteres Verfahren, wie die Schwadablegeeinrichtung zum Legen eines Einfach- bzw. Doppelschwades eingesetzt werden kann.

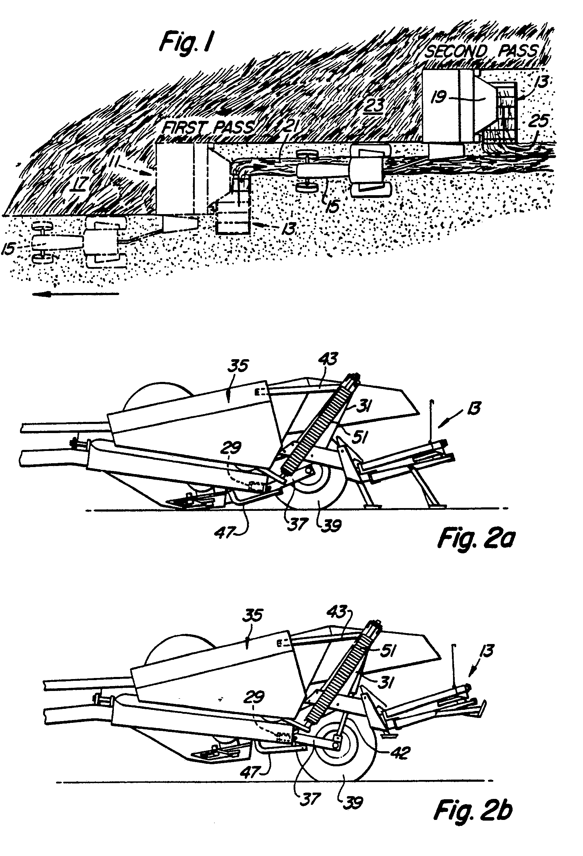

In der nachfolgenden Beschreibung beziehen sich Begriffe wie vorwärts, rückwärts, vertikal, horizontal, seitlich auf die Erntemaschine in ihrer normalen Arbeitsposition und mit Bezug auf die Fahrtrichtung nach vorne und die Ausdrücke links und rechts auf eine hinter der Maschine stehende und in Fahrtrichtung schauende Person. Fig. 1 der Zeichnung zeigt eine an eine Erntemaschine 11 angeschlossene Schwadablegeeinrichtung 13 bei zwei aufeinanderfolgenden Arbeitsgängen, bei dem einmal ein einzelner Schwad 21 und nachfolgend ein weiterer Schwad 25 zu dem einzelnen Schwad 21 abgelegt wird, um einen Doppelschwad zu formen. Wie ferner aus Fig. 1 der Zeichnung hervorgeht, handelt es sich bei der Erntemaschine 11 um ein gezogenes Gerät, doch wird an dieser Stelle darauf verwiesen, daß die Schwadablegeeinrichtung auch an selbstfahrenden Maschinen Verwendung finden kann. Die Erntemaschine 11 im Ausführungsbeispiel ist als Mähschlagzetter ausgebildet, wie er beispielsweise in der US-A-3 797 207 dargestellt ist. Derartige Erntemaschinen schneiden zunächst das Gut, dann bereiten sie es auf durch Quetschen und legen anschließend das aufbereitete Gut in einem Schwad ab. An derartige Maschinen aber auch an andere kann die Schwadablegeeinrichtung nach der Erfindung angeschlossen werden. Zum Schwadablegen wird mit dem aus Ackerschlepper und gezogener Erntemaschine bestehenden Gespann in einer ganz bestimmten Art und Weise über das abzuerntende Feld gefahren, und zwar derart, daß der Ackerschlepper nie über nicht abgemähtes Gut fährt und die Erntemaschine nach Möglichkeit immer im Einsatz ist. Aus Fig. 1 geht nun hervor, daß der Ackerschlepper 15 zunächst über einen Streifen abgeernteten Bodens bzw. auf einem Feldweg fährt, wobei die Erntemaschine 11 gegenüber dem Ackerschlepper 15 versetzt ist, um einen ersten Streifen 17 abzuernten. Das Erntegut wird, wenn es aus der Erntemaschine 11 austritt, auf die Schwadablegeeinrichtung 13 gelangen und teilweise direkt auf den Boden, um einen ersten Schwad 21 zwischen den Rädern allerdings zur rechten Seite hin zu bilden. Dabei ist die Ablegeposition der Schwadablegeeinrichtung 13 derart gewählt, daß der Schwad 21 eine Lage erhält, in der noch genügend Platz für den Ackerschlepper für die zweite Bahn bleibt, in der der Schwad zwischen den Rädern des Ackerschleppers zu liegen kommt, ohne daß der Ackerschlepper über nicht abgeerntetes Gut fahren müßte. Während der zweiten Bahn befindet sich die Erntemaschine rechts neben dem Ackerschlepper, um einen zweiten Streifen 23 abernten zu können. Dabei ist die Schwadablegeeinrichtung 13 derart in eine zweite Ablegeposition verstellt worden, daß das aus dem Streifen 23 abgeerntete Gut voll auf die Schwadablegeeinrichtung 13 auftrifft und dann nach links in einen Schwad 25 abgelegt wird, der sich links außerhalb der Maschine befindet und an den Schwad 21 anschließt bzw. diesen teilweise überlappt. Dadurch wird ein Doppelschwad gebildet.

Hierbei kann die zweite Schwadablegestellung und die Lage des zweiten Schwades 25 nach den Wünschen der Bedienungsperson variiert werden. So kann der Schwad 25 voll auf den Schwad 21 zur Auflage kommen, unmittelbar neben ihm liegen, oder von dem Schwad 21 einen Abstand aufweisen. Die maximale Breite eines Schwades wird durch die Aufnahmevorrichtung eines nachfolgend zum Einsatz kommenden Erntegerätes, beispielsweise eines Feldhäckslers oder einer Ballenpresse bestimmt, die den Schwad vom Feld aufnimmt. So kann es unter Umständen zweckmäßig sein, daß ein Teil des Schwades 25 sich auch innerhalb der äußeren Begrenzung der Erntemaschine 11 befindet.

Aus den Fig. 2 bis 5 gehen in größerem Detail die Basiskomponenten der Schwadablegeeinrichtung 13 zusammen mit den zusammenwirkenden Komponenten der Erntemaschine 11 hervor. Die Erntemaschine 11 besteht im einzelnen aus einem Hauptrahmen 27 mit einem Querteil 29 und zwei zueinander Abstand aufweisenden Hochteilen 31 und 33, die sich von dem Querteil 29 aus nach oben erstrecken. Ein Erntekopf 35 ist an dem Hauptrahmen 27 angeschlossen und erstreckt sich von dem Querteil 29 aus gesehen nach vorne.

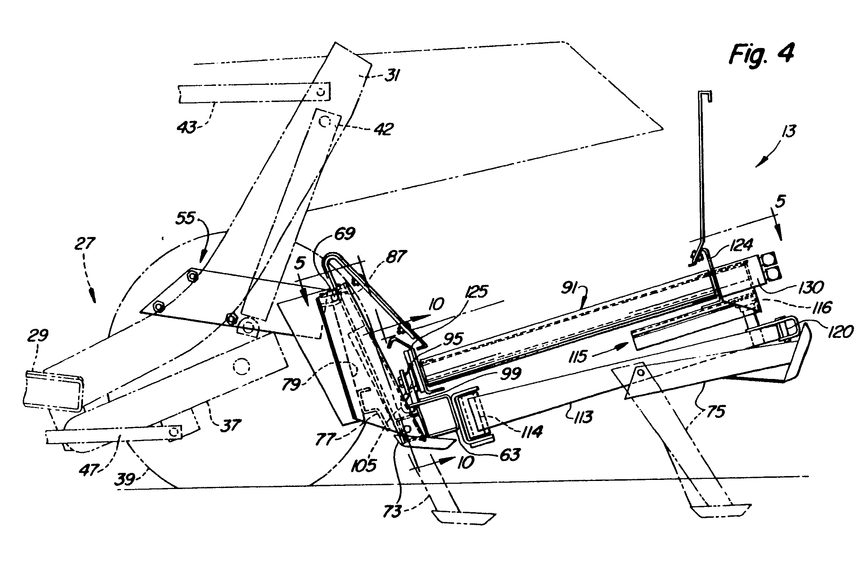

Wie bereits ausgeführt wurde, ist die Erntemaschine in ihren Einzelheiten in der US-A-3 797 207 dargestellt. Hier wird deshalb nur kurz auf die wichtigsten Einzelteile eingegangen. Zwei zueinander Querabstand aufweisende Radträger 37, von denen lediglich ein einziger in der Zeichnung dargestellt ist, sind mit dem Querteil 29 derart verbunden, daß sie vertikal schwenkbar sind. Sie nehmen ferner Laufräder 39 und 41 auf, die an ihnen drehbar angeordnet sind. Zwei hydraulisch beaufschlagbare Zylinder 42, von denen lediglich einer in Fig. 4 dargestellt ist, wirken Zwischen den Hochteilen 31 und 33 und den Radträgern 37, um diese vertikal zu verschwenken, wodurch der Querteil 29 und damit die gesamte Erntemaschine 11 relativ zu dem Boden zwischen einer Arbeitsposition und einer Transportstellung verschwenkt werden kann. Der Erntekopf 35 erstreckt sich längsweise über und vor dem Querteil 29 zwischen den Hochteilen 31 und 33. Obere Lenker 43, von denen in der Zeichnung nur einer dargestellt ist, und untere Lenker 47, von denen ebenfalls nur einer dargestellt ist, schließen den Erntekopf 35 an den Hauptrahmen 27 an. Im einzelnen erstrecken sich die oberen Lenker 43 zwischen dem Erntekopf 35 und den oberen Enden der Hochteile 31 und 33. Die unteren Lenker 47 wiederum sind zwischen dem Erntekopf 35 und den Radträgern 37 vorgesehen. Federn 51 und 53 sind zwischen den oberen Enden der Hochteile 31 und 33 und dem Erntekopf 35 angeordnet und bewirken, daß der Erntekopf mit Bezug auf den Querteil 29 relativ nach oben gezogen wird.

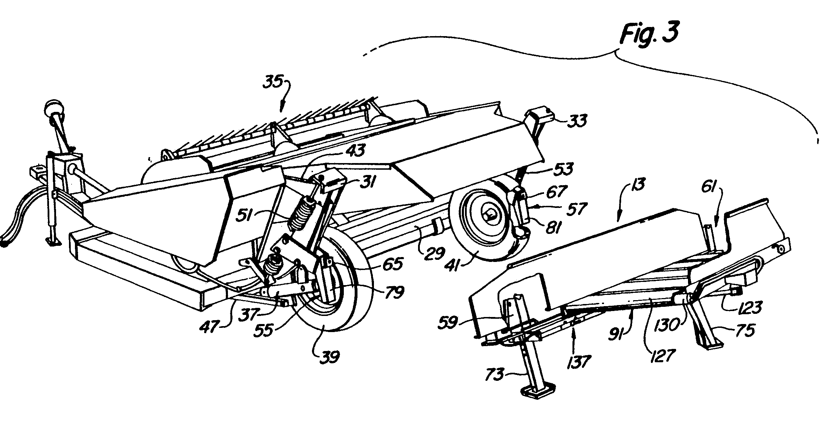

Aus Fig. 4 ist die an die Erntemaschine 11 angebaute Schwadablegeeinrichtung 13 zu erkennen, in der sich die Schwadablegeeinrichtung in ihrer Arbeitsposition befindet und in der sie keine Bodenberührung hat, d.h. sie wird vollkommen von der Erntemaschine getragen, und zwar an deren Rückseite, in der sie sich von dem Querteil 29 nach hinten erstreckt. Die Schwadablegeeinrichtung 13 selbst ist an der Erntemaschine 11 über erste und zweite Ausleger 55 und 57 angeordnet, die ihrerseits an dem Hauptrahmen 27 befestigt sind, und über erste und zweite zueinander Abstand aufweisende Ausleger 59 und 61, die fest an dem Hauptrahmen der Schwadablegeeinrichtung 13 angebracht sind, wobei der Hauptrahmen durch einen querverlaufenden Rahmen 63 gebildet ist. Die Ausleger 55 und 57 weisen sich nach oben öffnende, v-förmig ausgebildete Haken 65 und 67 auf, in die entsprechende Querbolzen 69 und 71 an den Auslegern 59 und 61 der Schwadablegeeinrichtung 13 eingreifen können. Diese Anschlußelemente in Form der Querbolzen 69 und 71 weisen einen vertikalen Abstand zu dem Rahmen 63 auf, befinden sich in Fahrtrichtung gesehen vor dem Schwerpunkt der Schwadablegeeinrichtung 13 und bilden eine Schwenkachse, um die die Schwadablegeeinrichtung mit Bezug auf die Erntemaschine 11 schwenken kann. Zum Anschließen der Schwadablegeeinrichtung 13 an die Erntemaschine 11 wird die Schwadablegeeinrichtung, wie es aus Fig. 2 hervorgeht, nahe an die Erntemaschine 11 herangebracht. Dies kann in einfacher Weise dadurch getan werden, daß die Erntemaschine rückwärts gefahren wird, bis sie sich im wesentlichen vor der Schwadablegeeinrichtung 13 befindet. In dieser Stellung stützt sich die Schwadablegeeinrichtung 13 noch auf drei Standbeinen 73 und 75 ab, die mit Ausnahme des dritten in den Fig. 3 und 4 zu sehen sind. In diesem Zustand kann dann die Ablageeinrichtung derart auf dem Boden verrutscht werden, daß die Haken 65 und 67 unter die Anschlußelemente 69 und 71 an der Schwadablegeeinrichtung 13 zu liegen kommen. Der Anbau der Schwadablegeeinrichtung 13 an die Erntemaschine 11 erfolgt dann in einfacher Weise dadurch, daß der Hauptrahmen 27 zusammen mit dem daran angeschlossenen Erntekopf 35 aus einer unteren Arbeitsposition, die schematisch in Fig. 2a dargestellt ist und in der das Gut abgeerntet wird, in eine höher gelegene Transportposition verstellt wird, die aus der Fig. 2b zu ersehen ist. Wenn nun der Hauptrahmen 27 von der Arbeitsposition in die Transportposition verstellt wird, dann werden die Anschlußelemente 69 und 71 in den zugehörigen Haken 65 und 67 aufgenommen, und sobald die Schwadablegeeinrichtung von dem Boden abgehoben wird, schwenkt sie um die Querbolzen 69 und 71, bis sie gegen die Erntemaschine 11 zur Anlage kommt. Im einzelnen schwenkt bei dieser Ausführung die Schwadablegeeinrichtung 13, bis Queranschläge 77 (von denen nur einer gezeigt ist) an den Auslegen 59 und 61 gegen die rückwärtigen Oberflächen 79 und 81 der Ausleger 55 und 57 an der Erntemaschine 11 zur Anlage kommen. Nachdem die Erntemaschine in ihre Transportstellung verstellt wurde, müssen die Standbeine 73 und 75 noch aus ihrer ausgefahrenen Stützposition in eine Arbeitsposition unterhalb der Schwadablegeeinrichtung verschwenkt werden. Um zu gewährleisten, daß die Anschlußelemente 69 und 71 in den Haken 65 und 67 verbleiben, sind Sperrstifte 87 und 89 vorgesehen, die quer zu den Anschlußelementen 69 und 71 in die oberen Teile der Ausleger 55 und 57 eingesetzt werden.

Der Abbau der Schwadablegeeinrichtung 13 von der Erntemaschine 11 kann in einfacher Weise dadurch ausgeführt werden, daß die einzelnen Schritte einfach umgekehrt werden. Hierzu ist es erforderlich, die Sperrstifte 87 und 89 zu entfernen, die Standbeine 73 und 75 wieder in ihre nach unten gerichtete Position zu verbringen und dort zu arretieren und danach die Erntemaschine aus ihrer Transportstellung in ihre Arbeitsstellung abzusenken. Wenn nun die Erntemaschine in die Arbeitsstellung abgesenkt wird, dann treten die Anschlußelemente 69 und 71 aus den Haken 65 und 67 aus. Befindet sich nun die Erntemaschine 11 in der Arbeitsstellung und ist die Schwadablegeeinrichtung 13 auf dem Erdboden direkt hinter der Erntemaschine abgestellt, so braucht die Schwadablegeeinrichtung nur noch nach rückwärts von der Erntemaschine weggezogen werden, so daß sie vollkommen frei ist. Aus vorstehendem folgt, daß der An- und Abbau der Schwadablegeeinrichtung in einfachster Weise ohne Zuhilfenahme von Werkzeugen erfolgen kann, wozu lediglich die Bedienungsperson erforderlich ist.

Aufgrund dieser erfindungsgemäßen Anordnung werden verschiedene sehr bedeutende Vorteile erreicht.

1. Die Federung und schwimmende Aufhängung des Erntekopfes 35 an dem Hauptrahmen 27 wird durch den An- und Abbau der Schwadablegeeinrichtung 13 nicht beeinträchtigt.

2. Das Gewicht der Schwadablegeeinrichtung 13 balanciert das Gewicht des Erntekopfes 35 an dem Hauptrahmen 27 aus, wodurch die Erntemaschine eine längere Lebensdauer erhält.

3. Die Haken 65 und 67 und die Anschlußelemente 69 und 71 sind oberhalb des durch den Rahmen 23 gebildeten Hauptrahmens und vor der Schwerpunktlage der Schwadablegeeinrichtung 13 angeordnet, wodurch die Schwadablegeeinrichtung 13 frei nach oben wegschwingen kann, sofern sie gegen Hindernisse stoßen sollte oder beim Durchfahren von tieferen Gräben während des Einsatzes von Erntemaschine und Schwadablegeeinrichtung.

4. Die Haken 65 und 67 haben eine v-förmige Konfiguration, die eine größere Toleranz für die Anordnung der Schwadablegeeinrichtung 13 mit Bezug auf die Erntemaschine 11 während des Anbaus ermöglicht.

Hierdurch wird der Anbau einfacher gestaltet, da dies der Bedienungsperson es erlaubt, die Erntemaschine 11 Zurückzuschieben und/oder die Schwadablegeeinrichtung 13 an ihren Platz zu ziehen, so daß die Anschlußelemente 69 und 71 leicht von den Haken 65 und 67 erfaßt werden können, wenn die Erntemaschine 11 in ihre Transportstellung hochgefahren wird. Infolge der Anordnung der rückwärtigen Flächen 79 und 81 und der Haken 65 und 67 wird die Ablegeeinrichtung richtig positioniert für den Einsatz an der Erntemaschine 11, wenn die Erntemaschine 11 hochgefahren wird, ohne daß eine zusätzliche Einstellung durch die Bedienungsperson erforderlich wäre.

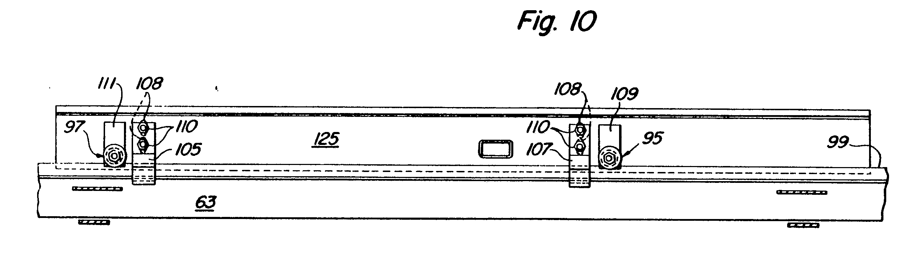

Zur Beschreibung des Querförderers der Schwadablegeeinrichtung wird insbesondere auf die Fig. 4 bis 6 und 10 verwiesen. Im einzelnen ist die Schwadablegeeinrichtung 13 mit einem in seiner Förderrichtung umkehrbaren und in den Ansprüchen als Querförderer bezeichneten Förderer 91 ausgerüstet, der verschiebbar auf dem Rahmen 63 an vorzugsweise 3 Punkten angeordnet ist. Nach einem bevorzugten Ausführungsbeispiel ist der Förderer 91 über einen Stellmechanismus 93 zwischen zwei Endstellungen an dem Rahmen 63 hin und her verstellbar, wobei die eine Endstellung dazu dient, einen Schwad zwischen den Rädern der Erntemaschine, d.h. innerhalb ihrer äußeren Begrenzung abzulegen. Diese Endstellung wird auch als erste Gutablagestellung bezeichnet. In der zweiten Endstellung kann der Schwad im Bereich einer seitlichen Begrenzung, d.h. im Bereich eines Rades innerhalb oder außerhalb dieses Rades abgelegt werden. Zwei oder mehr, vorzugsweise allerdings zwei Stützpunkte sind an einer Seite des Förderers 91 und lediglich ein Stützpunkt ist an der gegenüberliegenden Seite des Förderers 91 vorgesehen. Die beiden auf einer Seite des Förderers 91 im Bereich des Rahmens 63 liegenden Stützpunkte werden durch zwei Gleitfüße 95 und 97 bzw. Rollen gebildet, die auf einer Führung 99 verstellbar sind, wobei sich die Führung längs des Rahmens 63 erstreckt. In dem bevorzugten Ausführungsbeispiel sind die Rollen 95 und 97 identisch ausgebildet und mit zwei Paar Abstand zueinander aufweisenden Flanschscheiben 101, 103 und 102, 104 versehen, durch die die Rollen auf der Führung 99 gehalten werden. Zusätzlich sind einstellbare Niederhalter 105, 107 noch vorgesehen, die dazu dienen, die Rollen 95 und 97 auf der Führung 99 weiter zu halten. Aus Fig. 10 ist zu ersehen, daß die Niederhalter 105 und 107 in Folge von mehreren in ihnen vorgesehenen Schlitzen 108 verstellbar sind, durch die sich wiederum Schrauben 110 erstrecken, die mit dem Förderer verbindbar sind. Um zu verhindern, daß sich im Bereich der Rollen 95 und 97 ein Gutsstau bildet, sind die Rollen 95 und 97 an Platten 109 und 111 angeordnet, die sich unterhalb der entsprechenden Flanschscheiben einer jeden Rolle erstrecken. Die Platten 109 und 111 dienen dazu, das Gut von der Führung 99 fortzudrücken, bevor Gut oder anderes Material sich zwischen der Führung 99 und den Rollen 95 und 97 aufstauen könnte. Selbstverständlich kann die Funktion der Platten 109 und 111 auch durch eine Platte oder ein anderes Teil, das unabhängig von dem Träger der Rollen 95 und 97 ist, erfolgen.

Der dritte Stützpunkt, der der einzige für die gegenüberliegende Seite des Förderers ist, wird durch einen sich zu seinem rückwärtigen Ende hin verjüngenden Arm 113 gebildet, der an einem Ende mit dem Rahmen 63 über ein Gelenk 114 verbunden ist und dessen anderes Ende in einer Schiene 115 verschiebbar aufgenommen ist, die mit der Bodenoberfläche des Förderers 91 in Verbindung steht. Die sich verjüngende Ausführung des Armes 113 vermindert das Gewicht und ermöglicht eine größere Flexibilität, wodurch Stoßbelastungen am Hauptrahmen 27 der Erntemaschine 11 verhindert werden.

Auch die Lagerung des Förderers in nur drei Punkten ergibt zahlreiche Vorteile. Zunächst hat der Stellmechanismus 93 eine geringere Tendenz zu klemmen, und zwar im Vergleich zu herkömmlichen Vorrichtungen. Dann ist die Herstellung des Förderers 91 einfacher, da ein Verziehen des Förderers 91 weniger kritisch ist. Drittens benötigen die auf der Führung 99 laufenden Rollen 95 und 97 weniger Schmierstoff als herkömmliche Laufschienen, die einen Metall zu Metall Kontakt haben. Schließlich ist die Kraft, die benötigt wird, um den Förderer hin und her zu verstellen, gering, wodurch es wiederum ermöglicht wird, den Rahmen des Förderers und den Stellmechanismus 93 leichter auszugestalten.

Der vorstehend beschriebene Arm 113 dient nicht nur dazu, den Förderer zu tragen, sondern er bildet auch eine Komponente des Stellmechanismus 93, um den Förderer 91 seitlich zwischen seinen beiden Endstellungen hin und her zu schieben. Hierzu wird die Kraft auf den Förderer 91 durch ein abgedichtetes Lager 116 übertragen, das an dem rückwärtigen Ende des Armes 113 vorgesehen ist. Das Lager 116 läuft in der Schiene 115 und wird durch die Schwenkbewegung des Armes 113 um das Gelenk 114 auf einem Kreisbogen bewegt, der wiederum bewirkt, daß sich der Förderer 91 seitlich in einer geraden Linie verschiebt.

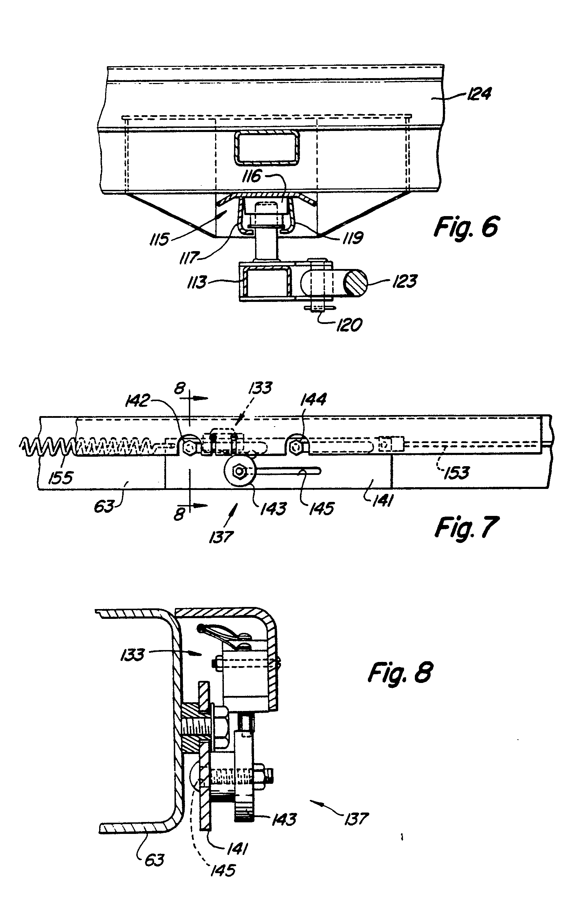

Schiene 115 und Lager 116 sind derart ausgebildet, daß sie sich frei mit Bezug zueinander während der Schiebebewegung des Förderers 91 bewegen können. Dies wird auf zwei Wegen bewerkstelligt. Erstens ist die Schiene 115 mit Seitenwänden 117 und 119, die in Fig. 6 zu erkennen sind, versehen, die von der unteren Oberfläche des Förderers 91 nach außen divergieren. Zweitens ist der Arm 113 mit einer geringen torsionalen Festigkeit versehen, wodurch das Lager 116 in der Schiene 115 leicht kippen kann, wenn sich der Förderer 51 bewegt. Die Kippbewegung des Lagers 116 erlaubt es dem Lager in einer oberen Kante zu laufen, anstatt daß seine obere Oberfläche in der Schiene 115 schleift. Hierdurch werden die Reibungskräfte zwischen der Schiene 115 und dem Lager 116 reduziert, wodurch gleichfalls der Bedarf an Schmiermittel verringert wird.

Im einzelnen wird der Stellmechanismus 93 für den Förderer, der aus dem Arm 113 und der Schiene 115 gebildet wird über einen hydraulisch beaufschlagbaren Zylinder 121 betätigt, über den der Arm 113 um sein Gelenk 114 hin und her geschwenkt werden kann. Der hydraulisch beaufschlagbare Zylinder 121 ist an seinem einen Ende an den Rahmen 63 über ein Gelenk 122 angeschlossen und greift mit seinem anderen Ende an den Arm 113 über ein Gelenk 120 an. Durch Ausfahren einer Zylinderstange 123 des Zylinders 121 wird der Querförderer nach rechts verstellt, während durch Einfahren der Zylinderstange 123 der Förderer nach links verschoben wird.

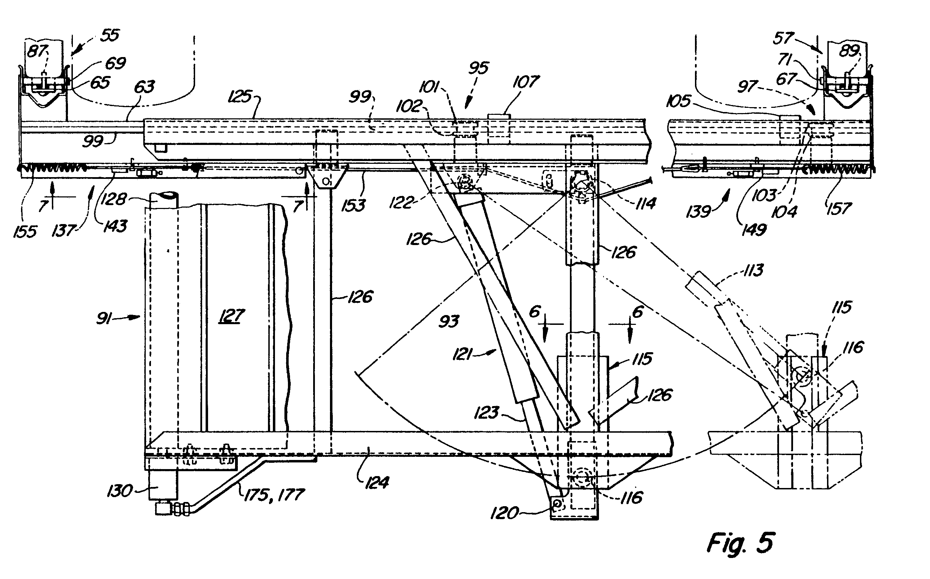

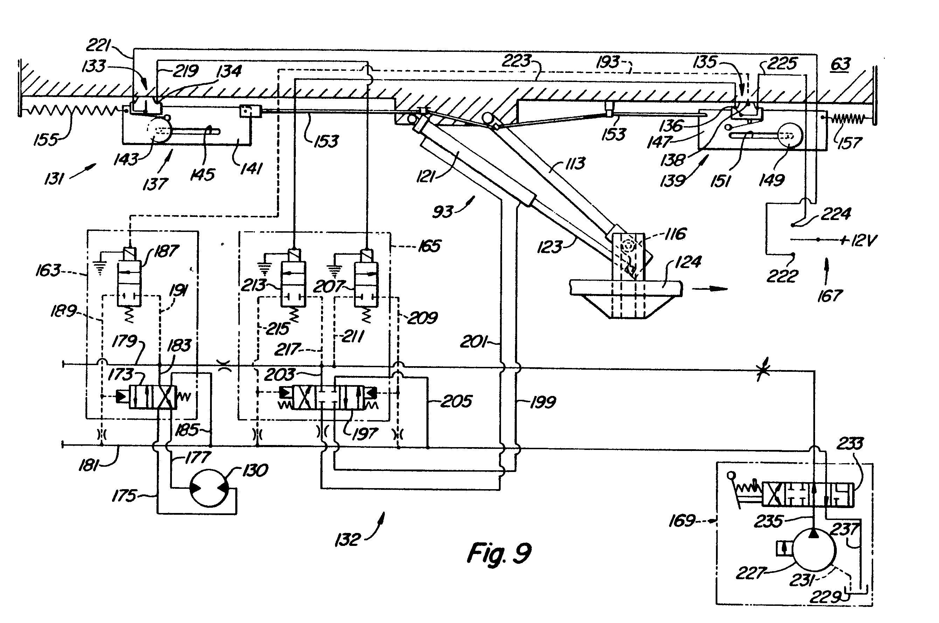

Aus den Fig. 4 und 5 ist zu entnehmen, daß der Förderer 91 zwei Abstand zueinander aufweisende Seiten 124 und 125 beinhaltet, die durch mehrere Träger 126 miteinander verbunden sind. Eine Plane 127 ist drehbar zwischen zwei Rollen vorgesehen, wobei die treibende Rolle mit 128 bezeichnet ist. Die getriebene Rolle ist aus den Zeichnungen nicht erkennbar. Die treibende Rolle 128 wird durch einen herkömmlichen hydraulisch beaufschlagbaren Motor, der in den Fig. 9 und 5 zu erkennen ist, angetrieben.

Der Stellmechanismus 93 wird über einen elektrohydraulischen Steuerkreis beaufschlagt, der im einzelnen in Fig. 9 der Zeichnung dargestellt und mit 132 bezeichnet ist, zum Antreiben und Verstellen des Förderers 91 dient und eine einstellbare Steuerung 131 aufweist, die in den Fig. 5 und 7 bis 9 dargestellt ist. Zu dem Steuerkreis 132 gehört der Zylinder 121 zur Betätigung des Stellmechanismus 93 und der Motor 130 zur Umkehrung der Drehrichtung des Förderers 91. Die Steuerung 131 ist einstellbar und dient dazu, die seitliche Schiebebewegung des Förderers hin und her zwischen der ersten und zweiten Endstellung zu begrenzen. Die Einstellung der Ablegepositionen bzw. der Endstellungen macht es möglich, daß ein doppelter Schwad entweder nebeneinander oder aufeinander abgelegt werden kann. Zu der Steuerung 131 gehören ein erster und ein zweiter Betätiger 137 und 139 über die ein erster Schalter 133 und ein zweiter Schalter 135 betätigt werden können. Über den ersten Schalter wird der Stellmechanismus 93 deaktiviert, wenn der Förderer seine linksseitige Ablagestellung erreicht, wohingegen über den zweiten Schalter 135 der Stellmechanismus 93 deaktiviert wird, wenn der Förderer 91 seine zweite oder rechts gelegene Ablageposition erreicht. Außerdem ist im Bereich des Schalters 135 noch ein Schalter 138 vorgesehen, der dazu dient, die Drehrichtung des Motors 130 zu steuern. Die Schalter 133 und 135 sind normalerweise geschlossene Mikroschalter. Im einzelnen ist der Schalter 133 mit einem normalerweise geschlossenen Kontaktfinger 134 versehen, der elektrohydraulisch mit dem Zylinder 121 in Verbindung steht. Auch der Schalter 135 weist einen normalerweise geschlossenen Kontaktfinger 136 auf, der ebenfalls elektrohydraulisch mit dem Zylinder 121 verbunden ist. Der Kontaktfinger des Schalters 138 ist normalerweise offen und elektrohydraulisch mit dem Motor 130 verbunden. Die Kontaktfinger der Schalter 135 und 138 können auch in einem einzigen Schalter vereinigt sein, sie sollten nur hintereinander betätigt werden, und zwar in einem öffnenden oder schließenden Sinne. Der in den Fig. 7 und 8 dargestellte Betätiger 137 weist erstens einen Träger 141 auf, der längs auf dem Rahmen 63 über eine Schraubenvorrichtung 142, 144 verschiebbar ist, die mit dem Rahmen 63 verbunden ist, und zweitens einen Knopf 143, der einstellbar in einem Langloch 145 in dem Träger 141 festgesetzt werden kann. In gleicher Weise weist der Betätiger 139 einen Träger 147 auf, der verschiebbar an dem Rahmen 63 angeschlossen ist, sowie einen Knopf 149, der einstellbar in einem Langloch 151 des Trägers 147 festgesetzt werden kann. Die Betätiger 137 und 139 sind mit dem Arm verbunden und über diesen über eine Verbindung 153 in Form von Kabeln verschiebbar, wobei noch Federn 155 und 157 vorgesehen sind, über die die Träger 141 und 147 nach außen von dem Arm fortgezogen werden. Die Federn können auch als andere Zugmittel ausgebildet werden. Im bevorzugten Ausführungsbeispiel sind die Federn 155 und 157 zwischen dem Träger 141 und dem Rahmen 63 und dem Träger 147 und dem Rahmen 63 vorgesehen.

Die einstellbare Steuerung ist derart angeordnet, daß sie eine leichte Zugänglichkeit für die Bedienungsperson zum Einstellen der Gutablagepositionen des Förderers gewährleistet. Zusätzlich ist das Kabel 153 nicht all zu teuer in der Herstellung und nicht sehr störanfällig, wenn es mit Fremdgegenständen während des Einsatzes in Berührung kommt. Zusätzlich kann es leicht eingestellt werden, wenn das Gelenk 114 des Armes 115 versetzt werden müßte bei einem Einsatz an einer Schwadablegeeinrichtung 13 an Erntemaschinen die eine andere Breite haben.

Der Steuerkreis 132 ist ferner mit einer Ventileinheit 163 zum Steuern des in zwei verschiedenen Drehrichtungen umlaufenden Motors 130 versehen und mit einer Ventileinheit 165 zum Betätigen des hydraulisch beaufschlagbaren Zylinders 121 sowie mit einem Schalter 167 für die Bedienungsperson, über den der Stellmechanismus 93 zum Verstellen des Förderers 91 in seitlicher Richtung zwischen seinen zwei Endstellungen betätigt werden kann. Der Steuerkreis 132 ist ferner noch mit einer Hydraulikversorgung 169 versehen, über die unter Druck stehende hydraulische Flüssigkeit zu dem Zylinder 121 und dem Motor 130 gelangen kann. Wie ferner aus Fig. 9 hervorgeht, so ist die Steuereinheit 163 mit einem Pilotventil 173 ausgerüstet, das über Leitungen 175 und 177 mit dem Motor 130 und über Leitungen 183 und 185 mit Leitungen 179 und 181 verbunden ist, die zu der Hydraulikversorgung 169 führen. Zu der Ventileinheit 163 gehört ferner noch ein magnetgesteuertes Ventil 187, das mit dem Pilotventil 173 über eine Leitung 189 und mit der Leitung 179 über eine Leitung 191 in Verbindung steht. Das magnetgesteuerte Ventil 187 ist mit dem normalerweise offenen Schalter 138 über eine Leitung 193 verbunden. Über eine Rückführfeder an dem Pilotventil 173, die dem Pilotdruck entgegen wirkt wird das Ventil in eine Stellung verschoben, in der Flüssigekeit, die unter Druck steht, zu dem Motor 130 gelangen kann, um den Förderer 91 entgegen dem Uhrzeigerdrehsinn anzutreiben bzw. nach links, d.h. in einer Richtung die erforderlich ist, um die zweite Bahn der Maschine 11, wie sie in Fig. 1 dargestellt ist, durchfahren zu können. Sobald nun der Magnet des magnetgesteuerten Ventils 187 erregt wird, wird das Ventil 173 derart verschoben, daß die Drehrichtung des Motors 130 umgekehrt wird, das heißt, daß der Motor im Uhrzeigerdrehsinn umläuft in einer Richtung, um den Querförderer nach rechts zu drehen und zwar in einer Richtung die erforderlich, daß die Erntemaschine 11 die erste in Fig. 1 dargestellte Bahn durchfahren kann.

Die Ventileinheit 165 für den Zylinder 121 ist mit einem Pilotventil 197 versehen, das mit dem Zylinder 121 über Leitungen 199, 201 und mit den Leitungen 179, 181 über Leitungen 203 und 205 verbunden ist. Das Pilotventil 179 wird über an seinen Seiten vorgesehene Federn in seiner Neutralstellung gehalten, in der der Zufluß zum und Abfluß aus dem hydraulischen Zylinder 121 unterbunden ist. Das Pilotventil 179 kann aus seiner Neutralstellung in zwei weitere Stellungen verschoben werden, und zwar in eine Stellung, in der die Zylinderstange 123 des Zylinders 121 ausgefahren wird, und in eine Stellung, in der die Zylinderstange 123 des Zylinders 121 eingefahren wird. Zum Ausfahren des Zylinders 121 ist ein magnetgesteuertes Ventil 207 vorgesehen, das mit dem Pilotventil 197 über eine Leitung 209 in Verbindung steht. Das magnetgesteuerte Ventil 207 ist ferner mit der Leitung 179 über eine Leitung 211 in Verbindung. Um den Zylinder 121 einzufahren, ist ein weireres magnetgesteuertes Ventil 213 vorgesehen, das über eine Leitung 215 mit dem Pilotventil 197 und mit der Leitung 179 über eine Leitung 217 in Verbindung steht.

Der Magnet des magnetgesteuerten Ventils 207 ist in Reihe Zu dem linken Schalter 133 über eine Leitung 219 und mit dem Schalter 167 über eine Leitung 221 verbunden. Der Schalter 167 ist mit einer Stromquelle, wie einer Batterie, verbunden und weist zwei Klemmen 222 und 224 auf, wobei die Verstellung des Schalters 167 zu dem Kontakt 222 hin den Stromkreis zu dem Magnet des magnetgesteuerten Ventils 207 hin schließt, wodurch der Zylinder 121 ausgefahren und der Querförderer 91 nach rechts für die zweite Bahn, wie sie in Fig. 1 dargestellt ist, verschoben wird. Durch Verstellen des Schalters 167 zu der Klemme 224 hin wird der Stromkreis zu dem Magneten des magnetgesteuerten Ventils 213 geschlossen, wodurch der Zylinder 121 eingefahren und der Förderer 91 nach links in eine Gutablageposition für die erste Bahn des Förderers verschoben wird, wie sie in Fig. 1 dargestellt wird. Das magnetgesteuerte Ventil 213 ist in Reihe zu dem normalerweise geschlossenen Kontaktfinger 135 des Schalters 135 über eine Leitung 223 und zu dem Schalter 167 über eine Leitung 225 geschaltet.

Die in Fig. 9 dargestellte Hydraulikversorgung 169 ist vorzugsweise eine Hydraulikversorgung am ziehenden Ackerschlepper und auch dort angeordnet. Andererseits ist es allerdings auch möglich, eine unabhängige Hydraulikversorgung vorzusehen. So kann beispielsweise die Hydraulikversorgung 169 an der Schwadablegeeinrichtung 13 oder an der Erntemaschine 11 vorgesehen sein und über einen Antrieb an der Erntemaschine 11 angetrieben werden. Die Hydraulikversorgung 169 besteht im einzelnen aus einer Pumpe 227 mit variabler Fördermenge und konstantem Druck und einem Sammelbehälter 229, der mit der Pumpe 227 über eine Leitung 231 in Verbindung steht. Der Zufluß der Flüssigkeit von der Pumpe 231 kann über ein von Hand steuerbares Ventil 233 kontrolliert werden, das seinerseits wiederum an die Leitungen 179 und 181 angeschlossen ist, die wiederum mit der Ventileinheit 165 und der Ventileinheit 163 in Verbindung stehen, wie vorstehend ausgeführt wurde. Das Ventil 233 ist mit der Pumpe 227 über eine Leitung 235 und mit dem Sammelbehälter 229 über eine Leitung 237 verbunden. Der elektrohydraulische Steuerkreis 132 wird wie folgt betätigt. In den in Fig. 9 dargestellten verschiedenen Positionen der Ventile wird bereits der Motor 130 mit Druckflüssigkeit beaufschlagt und in einer bestimmten Drehrichtung, d.h. entgegen dem Uhrzeigerdrehsinn angetrieben. Ist der Antrieb des Motors beispielsweise bei nicht eingesetzter Erntemaschine nicht erforderlich, so muß lediglich das Ventil 233 in seine Neutralstellung verschoben werden, in der der Zufluß unterbrochen ist. Im übrigen befindet sich in der in Fig. 9 dargestellten Position der Querförderer 91 in einer seiner Endstellungen, in der der Zufluß von Druckflüssigkeit zu dem hydraulisch beaufschlagbaren Zylinder 121 unterbrochen ist. Um die erste Bahn zu durchfahren, muß der Querförderer 91 nach links verschoben werden, in der das Gut nach rechts abgegeben wird und der Querförderer damit im Uhrzeigerdrehsinn umläuft. In der in Fig. 9 dargestellten Stellung der einzelnen Ventile wird Druckflüssigkeit von der Hydraulikversorgung 139 durch die Leitung 179 von der Pumpe 227 und Rücklauföl zu dem Sammelbehälter 229 über die Leitung 181 gelangen. Wenn nun der Schalter 177 derart verstellt wird, daß der Stromkreis zu der Klemme 224 geschlossen wird, so wird ein Strom über die Leitung 225 und den Schalter 135 in die Leitung 223 fließen und den Magnet des magnetgesteuerten Ventiles 213 erregen. Letzteres verschiebt hierdurch das Pilotventil 197 mit Bezug auf Fig. 9 nach rechts, so daß Druckflüssigkeit über die Leitung 199 in den Zylinder 121 gelangen kann, wodurch der Zylinder 121 eingefahren wird und der Förderer 91 nach links verschoben wird. Unter diesen Bedingungen besteht ein Rückflußweg aus dem Zylinder 121 über die Leitung 201, das pilotgesteuerte Ventil 197 und die Leitung 205 zu der Leitung 181. Die nach links gerichtete Bewegung des Förderers 91 setzt sich so lange fort, bis der Schalter 135 über den Knopf 149 betätigt wird, wenn der Betätiger 139 nach links gegen die Wirkung der Feder 157 sich verschiebt. Die Betätigung durch den Knopf 149 öffnet den zu dem magnetgesteuerten Ventil 213 gehörenden Schalter und schließt den zu dem magnetgesteuerten Ventil 187 gehörenden Schalter, wodurch die Leitung 193 stromführend wird und der Magnet des magnetgesteuerten Ventils 187 erregt wird. Hierdurch wird das magnetgesteuerte Ventil 187 aus seiner Neutralstellung in eine Stellung verschoben, in der Druckflüssigkeit zu der der Feder abgelegenen Seite des Pilotventils 173 gelangen kann, wodurch dieses in eine Stellung verschoben wird, in der die Drehrichtung des Motors 130 umgekehrt wird, so daß der Motor und die Plane im Uhrzeigerdrehsinn mit Bezug auf Fig. 3 umlaufen. Ein Rücklaufweg von dem Motor 130 besteht durch die Leitung 177, das Pilotventil 173 und die Leitung 185 in die Leitung 181.

Nachdem die erste Bahn abgeschlossen wurde, betätigt die Bedienungsperson, ohne den Ernteprozeß zu unterbrechen, den Schalter 167 derart, daß der Stromkreis zur Klemme 224 unterbrochen und der Stromkreis zu der Klemme 222 geschlossen wird. Damit kann ein Strom durch die Leitung 221 und den Schalter 133 und die Leitung 219 zu dem Magnet des magnetgesteuerten Ventiles 107 fließen. Das magnetgesteuerte Ventil 207 wird dadurch das Pilotventil 197 mit Bezug auf Fig. 9 nach links verstellen, wodurch Druckflüssigkeit durch die Leitung 201 in den Zylinder 221 gelangen kann, wodurch dieser ausgefahren und der Förderer 91 nach rechts, wie es in Fig. 9 gezeigt ist, verstellt werden kann. Die Ventileinheit 163 für den Motor 130 ist dabei nicht stromführend, da der Schalter 167 von der Klemme 224 fortbewegt wurde. Hieraus folgt, daß das Pilotventil 173 über seine Feder in seine Ausgangsposition zurückverschoben wurde, in der es sich in der linken, in Fig. 9 dargestellten Position befindet. In dieser Stellung kann dann Flüssigkeit über die Leitung 177 zu dem Motor 130 gelangen und den Motor 130 und die Plane 127 entgegen dem Uhrzeigerdrehsinn antreiben. Rückflüssigkeit von dem Motor 130 kann über die Leitung 175, das Pilotventil 173 und die Leitung 185 in die Leitung 181 gelangen. Hieraus folgt, daß eine Gutabgabe nach links bereits erfolgt, bevor der Förderer 91 nach rechts verschoben wird. Das Verschieben des Förderers nach rechts dauert so lange, bis eine Betätigung des Schalters 133 durch die Betätigung durch den Knopf 143 erfolgt, wenn der Betätiger 137 nach rechts gegen die Wirkung der Feder 155 verschoben wird. Durch die Betätigung des Schalters 133 wird der Stromkreis zu dem magnetgesteuerten Ventil 207 durch den normalerweise geschlossenen Kontaktfinger 134 und die Leitung 219 unterbrochen. Dadurch wird das magnetgesteuerte Ventil 207 in seine Ausgangspositon zurückverstellt und der Pilotdruck an der einen Seite des Pilotventils kann sich zur Rücklaufleitung abbauen, wodurch das Pilotventil 197 in seine Neutralstellung zurückgeführt wird, wodurch das Ausfahren des Zylinders 121 unterbrochen ist. Rückflußflüssigkeit aus dem Zylinder 121 während des Ausfahrens kann durch die Leitung 199 das Pilotventil 197 und die Leitung 205 in die Leitung 181 gelangen.

Nachdem die zweite Bahn, wie sie in Fig. 1 dargestellt worden ist, beendet wurde, muß die Bedienungsperson die Schwadablegeeinrichtung 13 für eine zweite erste Bahn der Erntemaschine einstellen, d.h. für die Bildung eines ersten Schwads eines Doppelschwads. Um nun die Schwadablegeeinrichtung 13 in ihre Stellung für die erste Bahn zurückzuführen, wird der Schalter 167 wieder derart verstellt, daß der Stromkreis zu der Klemme 222 unterbrochen und der Stromkreis zu der Klemme 224 geschlossen wird, wodurch die Ventileinheit 165 derart betätigt wird, daß der Zylinder 121 eingefahren wird. Sobald das Einfahren des Zylinders 121 begonnen hat, wird der Schalter 133 deaktiviert, d.h. der Schalter 133 wird wieder in seine geschlossene Position verbracht. Dies hat aber keine Wirkung, da der Stromkreis über die Klemme 222 nicht geschlossen ist. Wenn nun der Förderer 91 weiter nach links verschoben wird, so wird zunächst eine Gutabgabe nach links (Fig. 1) solange erfolgen, bis der Schalter 135 über den Betätiger 139 betätigt wird. Hieraus folgt, daß der Förderer 91 vollkommen nach links verschoben wird, bevor die Drehrichtung des Motors 130 umgekehrt wird. Die Umkehrung der Drehrichtung des Motors 130 erfolgt, wenn der Schalter 138 geschlossen wird, wodurch über die Leitung 139 der Magnet des magnetgesteuerten Ventils 187 betätigt wird und letzlich der Motor 130 mit dem Förderer bzw. seiner umlaufenden Plane 127 im Uhrzeigerdrehsinn angetrieben werden, um das Gut nach rechts mit Bezug auf die Figuren 1 und 5 abzugeben.

Aus vorstehender Beschreibung folgt, daß bei der Verstellung der Schwadablegeeinrichtung 13 von einer ersten Bahn zu einer zweiten Bahnstellung die Umkehrung des Motors 130 bereits erfolgt, um die Abgabe des Gutes nach links zu bewirken, bevor eine Verstellung des Förderers nach rechts durchgeführt ist. Gleichfalls wird bei der Verstellung der Schwadablegeeinrichtung 13 aus der Stellung für die zweite Bahn in die Stellung für die erste Bahn die Umkehrung der Drehrichtung des Motors 130 verzögert, bis der Förderer vollständig nach links verschoben wurde. Die sofortige Umkehrung der Förderrichtung bei der Verstellung von der ersten Bahn in die zweite Bahn und die verzögerte Umkehrung bei der Verstellung von der zweiten Bahn zurück in die erste Bahn verhindert, daß Gut auf nicht abgeerntes Gut oder den Raum zwischen dem nicht abgeernteten Gut und dem ersten Schwad, über den der Ackerschlepper während der zweiten Bahn fahren muß, geworfen wird.

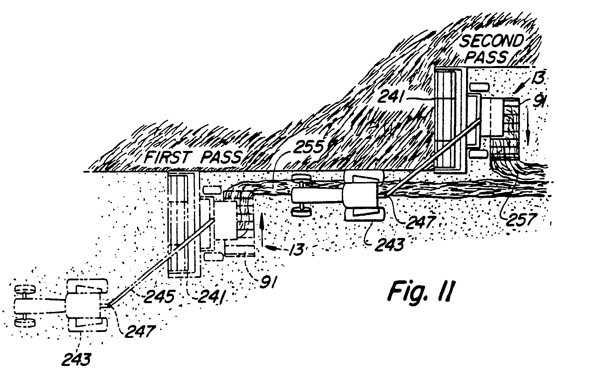

In Fig. 11 ist ein weiteres Verfahren für die Arbeitsweise der Erntemaschine 241 und der Schwadablegeeinrichtung 13 dargestellt. In der in Fig. 12 wiedergegebenen Arbeitsweise werden die Erntemaschine 241 und die Schwadablegeeinrichrung 13 rund um das Feld in der gleichen Richtung, wie die erste und die zweite Bahn gezogen. Für die erste Bahn wird der Förderer 91 der Schwadablegeeinrichtung 13 nach rechts in eine Gutabgabeposition zur Bidlung eines ersten Schwades 255 innerhalb der Begrenzungen der Erntemaschine verschoben. Der Förderer 91 wird dann im Uhrzeigerdrehsinn oder zur rechten Seite der Erntemaschine 241 angetrieben. Für die zweite Bahn wird der Förderer 91 der Schwadablegeeinrichtung dann nach links in eine Gutabgabeposition zur Bildung eines Schwads 257 entlang der linken Seite der Erntemaschine 241 verschoben. Der Förderer 91 wird dann entgegen dem Uhrzeigerdrehsinn oder zur linken Seite der Erntemaschine 241 hin angetrieben. Es wird darauf hingewiesen, daß bei der ersten Bahn der Förderer 91 nach rechts verschoben wurde und das Gut zur rechten Seite der Erntemaschine 241 fördert. In der zweiten Bahn ist der Querförderer 91 nach links verschoben und fördert das Gut zu linken Seite des Förderers 241. Auch solch eine Änderung erfordert eine nicht dargestellte Modifizierung des elektrohydraulischen Steuerkreises 132 nach Fig. 9.

**Patentansprüche**

1. Rückwärtig an eine sich auf Rädern (39, 41) abstützende Erntemaschine (11) angebaute Schwadablegeeinrichtung (13) mit einem Rahmen (63) und einem in seiner Förderrichtung umkehrbaren Querförderer (91), der am Rahmen (63) zwischen zwei Endstellungen derart verschiebbar angeordnet ist, daß entweder in der ersten Endstellung ein erster Schwad (21) vorzugsweise zwischen den Rädern (39, 41) oder in der zweiten Endstellung ein zu dem ersten Schwad (21) seitlich versetzter Schwad (25) durch Umkehrung der Förderrichtung abgelegt werden kann, wobei zum Verschieben von einer Endstellung in die andere ein Arm (113) einenends am Rahmen (63) angelenkt ist, dadurch gekennzeichnet, daß der Querförderer (91) mit einer quer zu seiner Förderrichtung ausgerichteten Schiene (115) versehen ist und daß das andere Ende des Arms (113) in der Schiene (115) längs zu dieser verschiebbar gelagert ist.

2. Schwadablegeeinrichtung nach Anspruch 1, dadurch gekennzeichnet, daß der Rahmen (63) an der der Erntemaschine (11) zugelegenen Seite der Schwadablegeeinrichtung (13) als Querbalken ausgebildet ist und eine Führung (99) aufnimmt, auf der die Schwadablegeeinrichtung (13) quer zur Fahrtrichtung verschiebbar ist.

3. Schwadablegeeinrichtung nach Anspruch 2, dadurch gekennzeichnet, daß der Querförderer (91) mit zwei zueinander Abstand aufweisenden Rollen (95, 97) versehen ist, die auf der Führung (99) laufen und Flanschscheiben (101 bis 104) aufweisen, die die Rollen auf der Führung halten.

4. Schwadablegeeinrichtung nach Anspruch 3, dadurch gekennzeichnet, daß die Rollen (95, 97) abgedeckt sind.

5. Schwadablegeeinrichtung nach einem oder mehreren der vorherigen Ansprüche, dadurch gekennzeichnet, daß der Arm (113) unterhalb des Querförderers (91) mit sich zu seinem in der Schiene (115) angeordneten Ende verjüngenden Seitenwänden vorgesehen ist.

6. Schwadablegeeinrichtung nach Anspruch 5, dadurch gekennzeichnet, daß der Arm (113) beim Verschieben des Querförderers (91) verwindbar ist.

7. Schwadablegeeinrichtung nach einem oder mehreren der vorherigen Ansprüche, dadurch gekennzeichnet, daß das in der Schiene (115) verschiebbar angeordnete Ende des Arms (113) ein zylindrisches Lager (116) aufweist, das in der Schiene verschiebbar ist und um eine Achse umläuft, die normalerweise senkrecht zu der Längsachse des Arms verläuft.

8. Schwadablegeeinrichtung nach einem oder mehreren der vorherigen Ansprüche, dadurch gekennzeichnet, daß die Rollen (95, 97) über Niederhalter (105, 107) auf der Führung (99) gehalten werden.

9. Schwadablegeeinrichtung nach einem oder mehreren der vorherigen Ansprüche, dadurch gekennzeichnet, daß den beiden Endstellungen des Querförderes (91) je ein Schalter (133, 135) zum Abschalten der Schiebebewegung des Querförderers (91) bei Erreichen einer seiner Endstellungen zugeordnet ist.

10. Schwadablegeeinrichtung nach Anspruch 9, dadurch gekennzeichnet, daß den beiden Schaltern (133, 135) je ein Betätiger (137, 139) zugeordnet ist, die je einen in Abhängigkeit von der Bewegung des Arms (113) verstellbaren Träger (141, 147) mit einem in diesem einstellbaren Knopf (143, 149) aufweisen, wobei die Knöpfe die Schalter (133, 135) betätigen.

11. Schwadablegeeinrichtung nach einem oder mehreren der vorherigen Ansprüche, dadurch gekennzeichnet, daß die Träger (141, 147) über Kabel (153) mit dem zwischen den Träger am Rahmen (63) angelenkten Arm (113) verbunden sind und gegen die Wirkung je einer Feder (155, 157) über den Arm verstellbar sind.

12. Schwadablegeeinrichtung nach Anspruch 10, dadurch gekennzeichnet, daß jeder Träger (141, 147) ein Langloch (145, 151) aufweist, in dem der zugehörige Knopf (143, 149) einstellbar ist.

13. Schwadablegeeinrichtung nach einem oder mehreren der vorherigen Ansprüche dadurch gekennzeichnet daß die Drehrichtung des Querförderers (91) in Abhängigkeit von der Stellung des Arms (113) umkehrbar ist.

14. Schwadablegeeinrichtung nach einem oder mehreren der vorherigen Ansprüche, dadurch gekennzeichnet, daß bei der Verschiebung des Querförderers (91) aus der einen Endstellung die Drehrichtung des Querförderers sofort und bei der Verschiebung des Querförderers aus der anderen Endstellung die Drehrichtung des Querförderers zeitlich verzögert umkehrbar ist.

15. Schwadablegeeinrichtung nach einem oder mehreren der vorherigen Ansprüche, dadurch gekennzeichnet, daß einem Betätiger (139) ein zweiter Schalter (138) zugeordnet ist.

16. Schwadablegeeinrichtung nach einem oder mehreren der vorherigen Ansprüche, dadurch gekennzeichnet, daß jeder Schalter (133, 135, 138) mit einem magnetgesteuerten Ventil (187, 207, 213) in Verbindung steht, die bei geschlossenem zugehörigen Schalter einen Flüssigkeitsfluß durch je eine von einer Kraftquelle (227) gespeiste Pilotleitung (189, 191, 209, 211 und 215, 217) gestatten.

17. Schwadablegeeinrichtung nach einem oder mehreren der vorherigen Ansprüche, dadurch gekennzeichnet, daß zur Umkehrung der Förderrichtung des Querförderers (91) ein Motor (120) vorgesehen ist.

18. Schwadablegeeinrichtunq nach einem oder mehreren der vorherigen Ansprüche, dadurch gekennzeichnet, daß ein magnetgestesteuertes Ventil (187) mit seiner Pilotleitung (189, 191) an eine Seite eines gegen die Wirkung einer Feder verstellbares Pilotventil (173) angeschlossen ist, das je nach seiner Stellung eine der beiden Seiten des Motors (130) mit der Kraftquelle (227) und die andere Seite mit einem Sammelbehälter (229) verbindet.

19. Schwadablegeeinrichtung nach einem oder mehreren der vorherigen Ansprüche, dadurch gekennzeichnet, daß die beiden anderen magnetgesteuerten Ventile (207, 213) mit ihren Pilotleitungen (209, 211 und 215, 217) an die sich gegenüberliegenden Seiten eines Pilotventils (197) angeschlossen sind, das dber Federn in seiner Neutralstellung gehalten ist und bei einer druckbeaufschlagten Seite eine Verbindung der Kraftquelle (227) mit einer Seite des hydraulischen Zylinders (121) bzw. des Sammelbehälters (227) mit der anderen Seite des hydraulischen Zylinders (121) herstellt.

20. Schwadablegeeinrichtung nach einem oder mehreren der vorherigen Ansprüche, dadurch gekennzeichnet, daß die magnetgesteuerten Ventile (187, 207 und 213) über Leitungen (193, 219 und 223) mit den Zugehörigen Schaltern (138, 133 und 135) verbunden sind, wobei das dem Motor (130) zugeordnete magnetgesteuerte Ventil (187) und das eine der dem hydraulischen Zylinder (121) zugeordneten magnetgesteuerten Ventile (207) dem Betätiger (137) mit den beiden Schaltern (138, 135) zugeordnet sind und das andere der dem hydraulischen Zylinder (121) Zugeordneten magnetgesteuerten Ventile (207) dem Betätiger (137) mit dem einen Schalter (133) zugeordnet sind und wobei beide Betätiger mit ihren Schaltern über je eine Leitung (225) und 221) über einen Schalter (167) wechselseitig mit einer Stromquelle verbindbar sind.

**Claims**

1. A swath laying apparatus (13) mounted at the rear on a harvester (11) which is supported on wheels (39, 41), comprising a frame (63) and a transverse conveyor (91) which is reversible in its direction of donveying movement and which is arranged on the frame (63) displaceably between two limit positions in such a way that either in the first limit position a first swath (21) can be laid preferably between the wheels (39, 41) or in the second limit position a swath (25) which is laterally displaced with respect to the first swath (21) can be laid by reversing the direction of conveying movement, wherein for the purposes of displacement from one limit position into the other an arm (113) is pivoted at one end to the frame (63) characterised in that the transverse conveyor (91) is provided with a rail (115) directed transversely with respect to its direction of conveying movement and that the other end of the arm (113) is mounted in the rail (115) displaceably longitudinally with respect thereto.

2. A swath laying apparatus according to claim 1 characterised in that the frame (63) is in the form of a transverse beam at the side of the swath laying apparatus (13), which is towards the harvester (11), and carries a guide (99) on which the swath laying apparatus (13) is displaceable transversely with respect to the direction of travel.

3. A swath laying apparatus according to claim 2 characterised in that the transverse conveyor (91) is provided with two mutually spaced rollers (95, 97) which run on the guide (99) and which have flange discs (101 to 104) which hold the rollers on the guide.

4. A swath laying apparatus according to claim 3 characterised in that the rollers (95, 97) are covered.

5. A swath laying apparatus according to one or more of the preceding claims characterised in that the arm (113) is provided beneath the transverse conveyor (91) with side walls which taper towards the end of the arm which is disposed in the rail (115).

6. A swath laying apparatus according to claim 5 characterised in that the arm (113) can be twisted upon displacement of the tranaverse conveyor (91).

7. A swath laying apparatus according to one or more of the preceding claims characterised in that the end of the arm (113) which is arranged displaceably in the rail (115) has a cylindrical bearing (116) which is displaceable in the rail and which rotates about an axis which normally extends perpendicularly to the longitudinal axis of the arm.

8. A swath laying apparatus according to one or more of the preceding claims characterised in that the rollers (95, 97) are held on the guide (99) by way of holding-down means (105, 107).

9. A swath laying apparatus according to one or more of the preceding claims characterised in that a switch (133, 135) for shutting off the displacement of the transverse conveyor (91) when one of its limit positions is reached is associated with each of the two limit positions of the transverse conveyor (91).

10. A swath laying apparatus according to claim 9 characterised in that associated with each of the two switches (133, 135) is a respective actuator (137, 139) which each have a carrier (141, 147) which is displaceable in dependence on the movement of the arm (113), with a knob (143, 149) which is adjustable in the carrier, wherein the knobs actuate the switches (133, 135).

11. A swath laying apparatus according to one or more of the preceding claims characterised in that the carriers (141, 147) are connected by way of cables (153) to the arm (113) which is pivoted to the frame (63) between the carriers, and the carriers are displaceable against the force of a respective spring (155, 157) by way of the arm.

12. A swath laying apparatus according to claim 10 characterised in that each carrier (141, 147) has a slot (145, 151) in which the associated knob (143, 149) can be adjusted.

13. A swath laying apparatus according to one or more of the preceding claims characterised in that the direction of rotary movement of the transverse conveyor (91) can be reversed in dependence on the position of the arm (113).

14. A swath laying apparatus according to one or more of the preceding claims characterised in that, upon displacement of the transverse conveyor (91) out of the one limit position, the direction of rotary movement of the transverse conveyor can be reversed immediately and, upon displacement of the transverse conveyor out of the other limit position, the direction of rotary movment of the transverse conveyor can be reversed with a time delay.

15. A swath laying apparatus according to one or more of the preceding claims characterised in that a second switch (138) is associated with an actuator (139).

16. A swath laying apparatus according to one or more of the preceding claims characterised in that each switch (133, 135, 138) is connected to a solenoid-controlled valve (187, 207, 213), which valves, when the associated switch is in a closed condition, permit a flow of fluid through a respective pilot conduit (189, 191, 209, 211 and 215, 217) which is fed by a power source (227).

17. A swath laying apparatus according to one or more of the preceding claims characterised in that a motor (120) is provided for reversal of the direction of conveying movement of the transverse conveyor (91).

18. A swath laying apparatus according to one or more of the preceding claims characterised in that a solenoid-controlled valve (187) is connected with its pilot conduit (189, 191) to one side of a pilot valve (171) which is displaceable against the force of a spring and which, in dependence on the respective position thereof, communicates one of the two sides of the motor (130) to the power source (227) and the other side to a collecting tank (229).

19. A swath laying apparatus according to one or more of the preceding claims characterised in that the other two solenoid-controlled valves (207, 213) are connected with their pilot conduits (209, 211 and 215, 217) to the mutually opposite sides of a pilot valve (197) which is held in its neutral position by way of springs and which, with one side subjected to pressure, provides a communication of the power source (227) with one side of the hydraulic cylinder (121) and of the collecting tank (27) with the other side of the hydraulic cylinder (121).

20. A swath laying apparutus according to one or more of the preceding claims characterised in that the solenoid-controlled valves (187, 207 and 213) are connected by way of conduits (193, 219 and 223) with the associated switches (138, 133 and 135), wherein the solenoid-controlled valve (187) associated with the motor (130) and the one of the solenoid-controlled valves (207) which are associated with the hydraulic cylinder (121) are associated with the actuator (137) with two switches (138, 135), and the other of the solenoid-controlled valves (207) which are associated with the hydraulic cylinder (121) is associated with the actuator (137) with the one switch (133) and wherein both actuators can be alternately connected to a power sourre with their switches by way of a respective conduit (225 and 221), by way of a switch (167).

## Revendications

1. Dispositif d'andainage (13) monté sur le côte arrière d'une moissonneuse (11) s'appuyant sur des roues (39, 41), comportant un bâti (63) et un transporteur transversal (91) dont le sens de déplacement peut être inversé, qui est placé sur le bâti (63) de façon à pouvoir se déplacer entre deux positions extrêmes de telle façon que, dans la première position extrême, un premier andain (21) puisse être déposé de préférence entre les roues (39, 41), ou, dans la seconde position extrême, un andain (25) décalé latéralement par rapport au premier andain (21) puisse être déposé par inversion du sens de transport, un bras (113) étant articulé à une extrémité au bâti (63) pour le passage d'une position extrême à l'autre, caractérisé en ce que le transporteur transversal (91) comporte un rail (115) orienté transversalement à sa direction de transport, et en ce que l'autre extrémité du bras (113) est placée de façon à être le mobile dans le rail (115), longitudinalement par rapport a celui-ci.

2. Dispositif d'andainage selon la revendication 1, caractérisé en ce que le bâti (63) est conformé en traverse du cité du dispositif d'andainage (13) situé vers la moissonneuse (11) et reçoit une glissière (99) sur laquelle le dispositif d'andainage (13) peut se déplacer transversalement au sens de marche.

3. Dispositif d'andainage selon la revendication 2, caractérisé en ce que le transporteur transversal (91) comporte deux rouleaux (95, 97) situés à une certaine distance mutuelle qui se déplacent sur la glissière (99) et comportent des bords (101 à 104) qui maintiennent les rouleaux sur la glissière.

4. Dispositif d'andainage selon la revendication 3, caractérisé en ce que les rouleaux (95, 97) sont recouverts.

5. Dispositif d'andainage selon une ou plusieurs des revendications précédentes, caractérisé en ce que le bras (113) est prévu sous le transporteur transversal (91) avec des parois latérales s'amincissant vers son extrémité placée dans le rail (115).

6. Dispositif d'andainage selon la revendication 5, caractérisé en ce que le bras (113) peut subir une torsion lors du déplacement du transporteur transversal (91).

7. Dispositif d'andainage selon une ou plusieurs des revendications précédentes, caractérisé en ce que l'extrémité du bras (113) placée de façon à pouvoir se déplacer dans le rail (115) comporte un palier cylindrique (116) qui peut se déplacer dans le rail et tourne autour d'un axe qui est normalement orthogonal à l'axe longitudinal du bras.

8. Dispositif d'andainage selon une ou plusieurs des revendications précédentes, caractérisé en ce que les rouleaux (95, 97) sont maintenus sur la glissière (99) au moyen d'organes d'appui (105, 107).

9. Dispositif d'andainage selon une ou plusieurs des revendications précédentes, caractérisé en ce qu'il correspond à chacune des deux positions extrêmes du transporteur transversal (91) un interrupteur (133, 135) pour arrêter le déplacement du transporteur transversal (91) lorsque l'une de ses positions extrêmes est atteinte.

10. Dispositif d'andainage selon la revendication 9, caractérisé en ce qu'il correspond à chacun des deux interrupteurs (133, 135) un organe d'actionnement (137, 139), lesquels comportent chacun un support, respectivement (141, 147), pouvant être déplacé en fonction du mouvement du bras (113), avec un bouton, respectivement (143, 149), réglable dans celui-ci, les boutons actionnant les interrupteurs (133, 135).

11. Dispositif d'andainage selon une ou plusieurs des revendications précédentes, caractérisé en ce que les supports (141, 147) sont reliés par des câbles (153) au bras (113) articulé entre les supports au bâti (63) et peuvent être déplacés par l'intermédiaire du bras contre l'action d'un ressort respectivement (155, 157).

12. Dispositif d'andainage selon la revendication 10, caractérisé en ce que chaque support (141, 147) comporte un trou oblong (145, 151) dans lequel le bouton correspondant (143, 149) est réglable.

13. Dispositif d'andainage selon une ou plusieurs des revendications précédentes, caractérisé en ce que le sens de rotation du transporteur transversal (91) peut être inversé en fonction de la position du bras (113).

14. Dispositif d'andainage selon une ou plusieurs des revendications précédentes, caractérisé en ce que, lors du déplacement du transporteur transversal (91) à partir de l'une des positions extrêmes, le sens de rotation du transporteur transversal peut être inversé immédiatement, tandis que, lors du déplacement du transporteur transversal à partir de l'autre position extrême, il peut l'être avec un certain retard.

15. Dispositif d'andainage selon une ou plusieurs des revendications précédentes, caractérisé en ce qu'un second interrupteur (138) est rattaché à un organe d'actionnement (139).

**0 168 665**

16. Dispositif d'andainage selon une ou plusieurs des revendications précédentes, caractérisé en ce que chaque interrupteur (133, 135, 138) est en liaison avec une valve à commande électromagnétique (187, 207, 213) qui permet, lorsque l'interrupteur correspondant est fermé, un écoulement de liquide par une conduite-pilote respective (189, 191, 209, 211 et 215, 217) alimentée à partir d'une source d'énergie (227).

17. Dispositif d'andainage selon une ou plusieurs des revendications précédentes, caractérisé en ce que, pour l'inversion du sens de transport du transporteur transversal (91), un moteur (120) est prévu.

18. Dispositif d'andainage selon une ou plusieurs des revendications précédentes, caractérisé en ce qu'une valve à commande électromagnétique (187) est raccordée par sa conduite-pilote (189, 191) à un côté d'une valve-pilote (173) pouvant être déplacée contre l'action d'un ressort, qui relie, selon sa position, l'un des deux côtés du moteur (130) à la source d'énergie (227) et l'autre côté à un réservoir collecteur (229).

19. Dispositif d'andainage selon une ou plusieurs des revendications précédentes, caratérisé en ce que les deux autres valves à commande électromagnétique (207, 213) sont raccordées par leurs conduites-pilotes (209, 211 et 215, 217) aux côtés opposés d'une valve-pilote (197) qui est maintenue par des ressorts dans sa position neutre et produit, lorsqu'un côté est soumis à l'action de la pression, une liaison de la source d'énergie (227) avec un côté du vérin hydraulique (121) ou du réservoir collecteur (227) avec l'autre côté du vérin hydraulique (121).

20. Dispositif d'andainage selon une ou plusieurs des revendications précédentes, caractérisé en ce que les valves à commande électromagnétique (187, 207 et 213) sont reliées par des conduitues (193, 219 et 223) aux interrupteurs correspondants (138, 133 et 135), la valve à commande électromagnétique (187) rattachée au moteur (130) et l'une des valves à commade électromagnétique (207) rattachée au vérin hydraulique (121) correspondant à l'organe d'actionnement (137) avec les deux interrupteurs (138, 135) et la seconde des valves à commande électromagnétiques (207) rattachées au vérin hydraulique (121) étant rattachée à l'organe d'actionnement (137) avec l'un des interrupteurs (133) et les deux organes d'actionnement pouvant, avec leurs interrupteurs, être reliés alternativement à une source de courant chacun par une ligne respective ( 225 et 221 ) par l'intermédiaire d'un interrupteur (167).

Fig. I

FIRST PASS 21
SECOND PASS
19
23
17
15
13
25
15

35 43
31
29
51
47 37 39
13

Fig. 2a

35 43
51
31
29
47 42
37 39
13

Fig. 2b

1

Fig. 3

Fig. 4

Fig. 5

0 168 665

Fig. 6

Fig. 7

Fig. 8

9

*Fig. 9*

# Fig. 10

Fig. II